# EUROPÄISCHE PATENTSCHRIFT

(11) **EP 2 784 369 B1**
(45) Veröffentlichungstag und Bekanntmachung des Hinweises auf die Patenterteilung: **24.10.2018**
(21) Anmeldenummer: 14161453.7
(22) Anmeldetag: 25.03.2014
(51) Int. Cl.: F16M 11/14, F16M 11/20

(54) **Gelenkarm**
Articulated arm
Bras articulé

(30) Priorität: 28.03.2013 DE 102013205700
(43) Veröffentlichungstag der Anmeldung: 01.10.2014
(73) Patentinhaber: 9.Solutions Technology Co., Limited, HONG KONG (CN)
(72) Erfinder: Bo, Christensen, 6430 Nordborg (DK)
(74) Vertreter: Lang, Christian

(56) Entgegenhaltungen:
- EP-A1- 1 099 900
- WO-A1-93/06376
- WO-A1-93/15668
- DE-C- 540 163
- US-A- 2 608 192

## Beschreibung

Ausführungsbeispiele der vorliegenden Erfindung beziehen sich auf einen Gelenkarm, ein Gelenkarmsystem, ein Verfahren zur Herstellung eines Gelenkarms und auf ein Verfahren zur Bedienung des Gelenkarms.

Gelenkarme finden Verwendung als Tragestrukturen in Bereichen wie Fotografie, Theater- oder Bühnenunterhaltung, wobei diese grundsätzlicher Weise auch für andere Bereiche, wie z.B. für industrielle oder medizinische Zwecke, eingesetzt werden können.

Ein herkömmlicher Gelenkarm, wie z.B. der Manfrotto Magic Arm, weist zwei Segmente auf, die über ein Ellbogengelenk miteinander verbunden sind. An den zwei Segmentenden ist je ein Kugelkopfgelenk zur Befestigung von Ausrüstung vorgesehen. Alle drei Gelenke und damit deren Bewegungen können durch ein zentrales Feststellrad bzw. eine zentrale Hebelschraube arretiert werden. Häufig kommen derartige Gelenkarme in Kombination mit einer sogenannten Superclamp bzw. Universalklemme zum Einsatz, die an beliebigen Bauelementen, wie z.B. an Stativen befestigt werden kann. Im Fotografiebereich kann durch eine derartige Kombination des Gelenkarms mit der Universalklemme eine Kamera für eine Aufnahme praktisch in jeder gewünschten Position positioniert werden, was mit einem normalen Fotostativ nicht möglich wäre. Ferner ist es auch möglich, an dem Fotostativ mittels des Gelenkarms und der Universalklemme Beleuchtungselemente direkt anzubringen, so dass auf ein zusätzliches Beleuchtungsstativ verzichtet werden kann.

Bei herkömmlichen Gelenkarmen ist die Einstellung der Position jedoch häufig aufwendig, da beim Lockern der Hebelschraube bzw. Feststellschraube der gesamte Arm durch die Betätigung bewegt wird. Deshalb müssen typischerweise zur Einstellung von herkömmlichen Gelenkarmen beide Hände verwendet werden. Dies kann unpraktisch sein, beispielweise wenn ein Fotograf, der während einer Fotoaufnahme eine Kamera hält, eine kleine Einstellungsänderung an dem Gelenkarm durchführen möchte. Ein weiterer Nachteil ist, dass auf alle drei Gelenke des herkömmlichen Gelenkarms dieselbe Kraft wirkt, so dass im Lauf der Zeit eine unsymmetrische Kraftverteilung entstehen kann. Ferner hat sich gezeigt, dass derartige Mechanismen auf Basis von einem Feststellrad bzw. einer Hebelschraube sehr empfindlich gegenüber Außeneinflüssen, wie z.B. Staub oder Feuchtigkeit, sind. Deshalb besteht der Bedarf nach einem verbesserten Ansatz.

DE 540 163 C1 offenbart einen Gelenkarm gemäß dem Oberbegriff des Anspruch 1.

Aufgabe der vorliegenden Erfindung ist es somit, einen Gelenkarm zu schaffen, der ergonomisch gute Einstellungsmöglichkeiten bei gleichzeitiger zuverlässiger Fixierung der Position bietet.

Die Aufgabe wird durch die unabhängigen Patentansprüche gelöst.

Die Erfindung schafft einen Gelenkarm mit einem ersten Segment und einem zweiten Segment. Das erste Segment ist mit einem ersten Gelenkelement (z.B. einer Kugelgelenkpfanne) gekoppelt, wobei das zweite Segment mit einem zweiten Gelenkelement (z.B. einem Kugelkopf) gekoppelt ist. Das erste und das zweite Gelenkelement sind derart in Eingriff, dass sie ein Drehgelenk (oder ein Kugelgelenk) formen. Das zweite Gelenkelement weist eine Oberfläche mit zumindest partiell konstantem Krümmungsradius (wie z.B. der einer Halbkugel) auf. Das erste Segment umfasst einen Kniehebelmechanismus, der ausgebildet ist, um eine Arretierkraft (z.B. entlang der Längsachse des ersten Segments) auf die Oberfläche des zweiten Gelenkelements in Richtung einer Flächennormalen der (beispielsweise kugelförmige) Oberfläche auszuüben.

Die Erfindung basiert auf der Erkenntnis, dass die Bedienung eines Gelenkarms durch den Einsatz eines Kniehebelmechanismus zur Verriegelung des Gelenks verbessert werden kann. Mittels dieses wird eine Arretierkraft erzeugt, so dass das Gelenk infolge von Reibung (basierend auf der Arretierkraft bzw. der daraus resultierenden Normalkraft) in einer stationären Position gehalten wird. Zusätzlich kann die Geometrie des Kniehebelmechanismus optional so ausgelegt sein, dass dieser in eine Endposition einrasten kann, in der die Arretierkraft aufrechterhalten wird. Das Gelenk des Gelenkarms kann beispielsweise ein Kugelgelenk mit einem Kugelkopf sein, wobei der Kniehebelmechanismus mittels eines kolbenartigen Bauteils die Arretierkraft auf den Kugelkopf ausübt, um diesen zu fixieren. Da das erste Segment des Gelenkarms einen ersten Griffteil bildet, während ein Hebel des Kniehebelmechanismus einen zweiten gegenüberliegenden Griffteil bildet, kann gleichzeitig die Positionierung des zu positionierenden ersten Segments des Gelenkarms und die Verriegelung über den Kniehebel mit einer Hand bewerkstelligt werden. Bei einer derartigen Konstruktion ist der Gelenkarm bevorzugterweise so segmentiert, dass je Kniehebelmechanismus nur ein Gelenk betätigbar ist. In der Konsequenz heißt das, dass ein derartiger Gelenkarm einfach positioniert bzw. neu positioniert werden kann, wobei sich die Arretierung durch hohe Zuverlässigkeit auszeichnet.

Erfindungssgemäß weist der Kniehebelmechanismus einen ersten und einen zweiten Hebel auf, die mit einem gemeinsamen Scharnier miteinander verbunden sind, wobei der erste Hebel mittels eines ersten Lagers gegenüber dem ersten (festen) Segment gelagert ist, so dass eine Drehung des ersten Hebels gegenüber dem ersten Segment um einen ersten Drehpunkt ermöglicht wird, und wobei der zweite Hebel mittels eines zweiten Lagers gegenüber dem ersten (festen) Segment gelagert ist, so dass eine Drehung des zweiten Hebels gegenüber dem ersten Segment um einen zweiten Drehpunkt ermöglicht wird. Dieser zweite Drehpunkt ist zusätzlich entlang der Längsachse verschiebbar, um bei der Verschiebung die Arretierkraft zu erzeugen. In Summe sind die zwei Hebel des Kniehebelmechanismus länger als der zur Verfügung stehende Abstand zwischen den zwei Drehpunkten, so dass eine Verschiebung des gemeinsamen Scharniers zwischen den zwei Hebeln zu einer statischen Überbestimmung führt, infolge der die Arretierkraft auf die Oberfläche des zweiten Gelenkelements (bzw. auf den Kugelkopf) ausgeübt wird.

Entsprechend weiteren Ausführungsbeispielen herrscht die statische Überbestimmung entlang eines statischen überbestimmten Bereichs vor, wobei der statisch überbestimmte Bereich durch einen Anschlag, der durch das erste Segment gebildet ist, begrenzt ist, so dass das Scharnier, wenn es an dem Anschlag anliegt, aufgrund der Steifigkeit des Kniehebelmechanismus gegen diesen gedrückt wird, so dass ohne externe Kraft sich der Kniehebelmechanismus nicht lösen kann und folglich die Arretierkraft aufrechterhalten wird.

Entsprechend weiteren Ausführungsbeispielen ist zur Einstellung der Arretierkraft der erste Drehpunkt des Kniehebelmechanismus entlang der Längsachse verschiebbar, so dass der maximale Abstand zwischen dem ersten und zweiten Drehpunkt, von welchem die Arretierkraft abhängig ist, verändert werden kann.

Ein weiteres Ausführungsbeispiel bezieht sich auf eine Gelenkarmsystem mit einem ersten oben beschriebenen Gelenkarm und einen zweiten (oben) beschriebenen Gelenkarm, wobei das zweite Segment des ersten Gelenkarms mit dem ersten Segment des zweiten Gelenkarms verbunden ist. So können mehrere Gelenkarme miteinander kombiniert werden, dass der Bewegungsraum des zu positionierenden Elements vergrößert wird bzw. flexibler gestaltet werden kann. Hierbei wird jedes Segment einzeln verstellt bzw. positioniert und wieder verriegelt, wobei die Bedienung des Gelenkarms (d.h. die Positionierung und Verriegelung) jeweils mit einer Hand zu bewerkstelligen ist.

Ein weiteres Ausführungsbeispiel bezieht sich auf ein Verfahren zur Bedienung des Gelenkarms, mit dem Schritt des Spannens des Kniehebelmechanismus, so dass eine Arretierkraft auf die Oberfläche des zweiten Gelenkelements in Richtung der Flächennormalen der Oberfläche ausgeübt wird.

Ausführungsbeispiele der Erfindung werden anhand der beiliegenden Zeichnungen erläutert. Es zeigen:
- Fig. 1a: eine schematische Ansicht eines Gelenkarms mit einem Kniehebelmechanismus in einer Nicht-Arretierungsposition gemäß einem Ausführungsbeispiel;
- Fig. 1b, 1c: schematische Ansichten des Gelenkarms aus Fig. la mit dem Kniehebelmechanismus in einer Arretierungsposition;
- Fig. 2a: eine isometrische Ansicht eines Gelenkarms mit einem Kniehebelmechanismus gemäß einem weiteren Ausführungsbeispiel;
- Fig. 2b: eine Schnittansicht des Gelenkarms aus Fig. 2a;
- Fig. 2c: eine Explosionsansicht des Gelenkarms aus Fig. 2a;
- Fig. 2d: eine Seitenansicht des Gelenkarms aus Fig. 2a in einer Arretierungsposition;
- Fig. 2e: eine Seitenansicht des Gelenkarms aus Fig. 2a in einer Nicht-Arretierungsposition;
- Fig. 3a: eine isometrische Ansicht eines Systems mit zwei Gelenkarmen aus Fig. 2a bis e gemäß weiteren Ausführungsbeispielen;
- Fig. 3b: eine weitere isometrische Ansicht des Systems aus Fig. 3a in Kombination mit einer Klemme und einem Beleuchtungselement;
- Fig. 4a: eine schematische Ansicht eines gewinkelten Gelenkarms mit dem Kniehebelmechanismus in der Nicht-Arretierungsposition gemäß einem weiteren Ausführungsbeispiel; und
- Fig. 4b: eine schematische Ansichten des gewinkelten Gelenkarms aus Fig. 4a in der Arretierungsposition.

Bevor nachfolgend Ausführungsbeispiele der vorliegenden Erfindung anhand der Figuren näher erläutert werden, wird darauf hingewiesen, dass gleiche oder gleichwirkende Elemente und Strukturen mit gleichen Bezugszeichen versehen sind, so dass die Beschreibung derer austauschbar ist bzw. aufeinander angewendet werden kann.

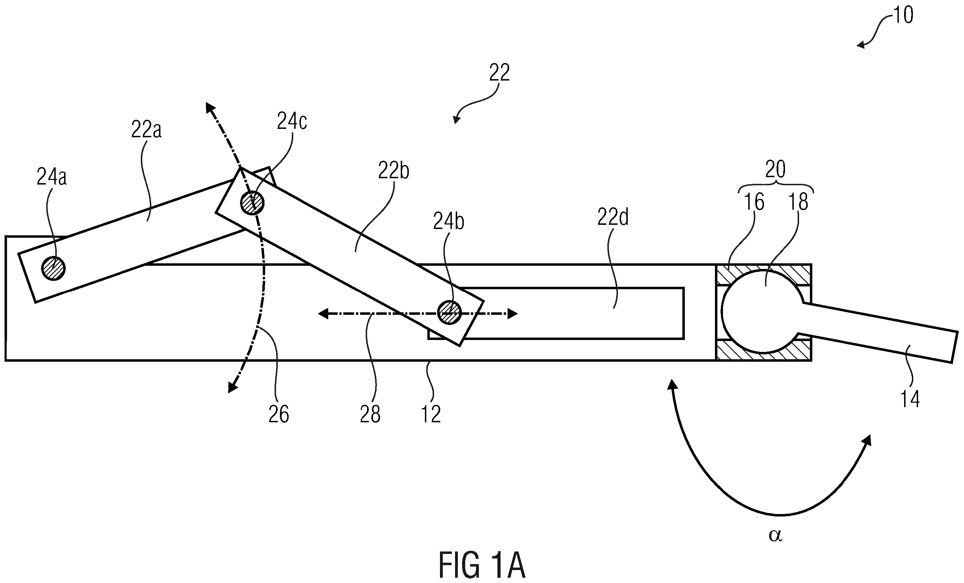

Fig. 1a zeigt einen Gelenkarm 10 mit einem ersten Segment, z.B. einem zylindrischen oder rohrförmigen Hauptkörper, und einem zweiten Segment 14, z.B. einem Gewindezapfen. Das erste Segment 12 ist mit einem ersten Gelenkelement 16, z.B. einer Kugelgelenkpfanne, verbunden, während das zweite Segment 14 mit einem zweiten Gelenkelement 18, z.B. der Kugel des Kugelgelenks, verbunden ist. Die zwei Gelenkelemente 16 und 18 bilden zusammen ein Drehgelenk 20, wie z.B. ein Kugelgelenk mit mindestens einem, bevorzugt aber zwei oder mehreren Freiheitsgraden. Das erste Segment 12 weist ferner einen Kniehebelmechanismus 22 auf.

Nachfolgend wird die Funktionsweise des Gelenkarms 10 bzw. insbesondere des Gelenks 20 erläutert, bevor im Detail auf die Struktur des Kniehebelmechanismus 22 eingegangen wird. Die Oberfläche des zweiten Gelenkelements 18 ist gebogen, kugelförmig oder weist zumindest partiell einen konstanten Krümmungsradius (z.B. im Fall einer Halbkugel oder eines Zylindermantelsegments) auf. Es sei an dieser Stelle angemerkt, dass in diesem Ausführungsbeispiel die gekrümmte bzw. kugelförmige Oberfläche des Gelenkelements 18 in Eingriff mit dem Gelenkelement 16 ist, das hier durch eine (Kugel-) Gelenkpfanne geformt ist, um die Lagerung zu übernehmen. Das Gelenkelement 16 weist bei diesem Ausführungsbeispiel eine Gelenköffnung 16b an der Stirnseite des Segments 12 auf, so dass sich ein Winkelbereich α von z.B. 180° (Zentralposition) +/- 45° oder +/- 60° ergibt. Somit lässt sich beispielsweise der resultierende Kippwinkel α in einem Bereich von 135° bis 225° oder von 120° bis 240° einstellen. Das Gelenk 20 und damit ein eingestellter Winkel zwischen dem ersten Segment 12 und dem zweiten Segment 14 werden mittels einer Arretierkraft F fixiert. Hierbei ist es von Vorteil, dass die Oberfläche einen konstanten Krümmungsradius aufweist, da so das Gelenk 20 in jeder möglichen Position bzw. in jedem möglichen Gelenkwinkel arretierbar ist. Nachfolgend wird exemplarisch auf eine mögliche Ausführungsform des Kniehebelmechanismus 22, der zur Erzeugung der Arretierkraft F dient, eingegangen.

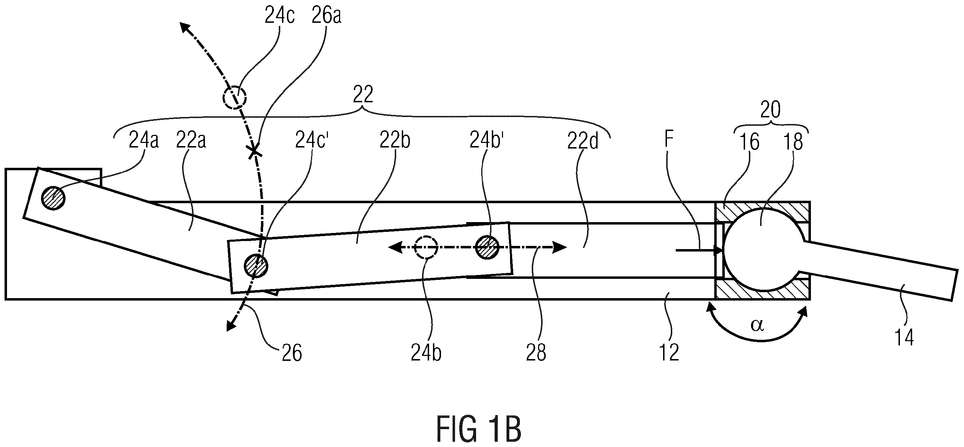

Der Kniehebelmechanismus 22 ist ausgebildet, um mit der Arretierkraft F, die entlang einer Normalenrichtung, beispielsweise entlang der Längsrichtung 28 (bzw. längs des Segments 12), verläuft, auf das zweite Gelenkelement 18 einzuwirken, wie insbesondere aus Fig. 1b hervorgeht. Diese Arretierkraft F bildet eine Normalkraft, so dass ein Reibschluss zwischen dem Kniehebelmechanismus 22 und der gekrümmten Oberfläche des Gelenkelements 18 ausgebildet wird. Bezugnehmend auf das Ausführungsbeispiel mit dem Kugelgelenk 22 heißt das, dass die Kugel 18 infolge der Arretierkraft F in dem Kugelansatz bzw. die Kugelpfanne 16 gedrückt wird, sodass dieses durch den Eingriff des Kniehebelmechanismus 22 und durch den Eingriff von Kugel 18 und Kugelpfanne 16 fixiert ist.

Bei dem dargestellten Ausführungsbeispiel umfasst der Kniehebelmechanismus 22 einen ersten Hebel 22a und einen zweiten Hebel 22b. Der erste Hebel 22a ist gegenüber dem ersten Segment 12 mit einem ersten Gelenk 24a, z.B. einem Drehgelenk mit nur einem Freiheitsgrad, gelagert. Hierdurch wird ein erster Drehpunkt 24a ausgebildet, um den der erste Hebel 22a rotierbar ist. Die longitudinale Position des Drehpunkts 24a gegenüber dem ersten Segment 12 ist fixiert. Der zweite Hebel 22b ist ebenfalls gegenüber dem ersten Segment 12 durch ein Gelenk 24b gelagert. Das Gelenk 24b umfasst beispielsweise eine Linearführung und ist somit in Längsrichtung 28 des ersten Segments 12 verschiebbar, wobei das Gelenk 24b zusätzlich eine Rotation des zweiten Hebels 22b um den Drehpunkt 24b zulässt. Der erste Hebel 22a, der auch als Kniegelenkhebel bezeichnet werden kann, und der zweite Hebel 22b, der auch als Druckhebel bezeichnet wird, sind mit einem Scharnier 24c miteinander verbunden, so dass die zwei Hebel 22a und 22b gegeneinander um einen gemeinsamen Drehpunkt 24c rotiert werden können. In anderen Worten heißt das, dass die zwei Hebel 22a und 22b den Kniehebel 22 mit dem Kniegelenk 24c ausbilden.

Bei einer Rotation des ersten Hebels 22a um den Drehpunkt 24a erfolgt eine Bewegung des Scharniers 24c entlang einer Rotationsbahn 26, wobei gleichzeitig der Drehpunkt 24b entlang der Längsachse 28 des ersten Segments 12 translatorisch verschoben wird. Durch diese Längsverschiebung 28 des Drehpunkts 24b wird die Arretierkraft F erzeugt, wenn das Kniegelenk 24c einen durch die Geometrie des Kniehebels 22 definierten Punkt 26a auf der Bewegungsbahn 26 überschritten hat. Hintergrund hierzu ist, dass ab diesem Punkt 26a die Längsbewegung des Drehpunkts 24b bzw. 24b' entlang der Längsachse 28 durch Eingriff des Kniehebels 22 mit dem zweite Gelenkelement 18 begrenzt ist, so dass eine Bewegung des Drehpunkts 24c bzw. 24c' über den Punkt 26a hinaus zu einer elastischen Verformung des Kniehebelmechanismus 22 führt, aus der die Arretierkraft F resultiert. Der Bereich jenseits des Punktes 26a wird statisch überbestimmter Bereich 26ac genannt, der Bezugnehmend auf Fig. 1b im Detail erläutert wird.

Es sei an dieser Stelle angemerkt, dass in diesem Ausführungsbeispiel die Arretierkraft F über einen optionalen zylinderförmigen Kolben 22d, der Bestandteil des Kniehebelmechanismus 22 ist, auf das zweite Gelenkelement 18 einwirkt. Der zylinderförmigen Kolben 22d ist über den Drehpunkt 24b mit dem zweiten Hebel 22b verbunden und übernimmt insbesondere die Aufgabe der linearen Führung des Drehpunkts 24b entlang der Bewegungsbahn 28 bzw. innerhalb eines Kanals 12c des Hauptkörpers 12.

Wie anhand von Fig. 1b zu erkennen ist, ist der Drehpunkt 24b' entlang der Bewegungsbahn 28 verschoben (vgl. ursprüngliche Position 24b), wenn der Drehpunkt 24c' entlang der Rotationsbahn 26 in den Bereich 26ac verschoben ist (vgl. ursprüngliche Position 24c). Hierbei illustriert die Position 24a' die Position auf der Bewegungsbahn 28, in der Kolben 22d und das Gelenkelement 18 in Eingriff sind, um mit der Arretierkraft F auf diesen zu wirken. Insofern kann durch die Bewegung des Drehpunkts 24c' entlang der Rotationsachse 26 über die Position 26a die Arretierkraft F erzeugt und ausgeübt werden. Der Bereich 26ac ist durch den Punkt 26a und durch den Punkt 26c auf der Bewegungsbahn 26 begrenzt. Der Punkt 26c stellt einen Anschlag des Kniehebels 22 an dem ersten Segment 12 dar. Hierbei ist dann der Hebelarm 22a und/oder der Hebelarm 22b jeweils an der Seite des Drehpunkts 24c, beispielsweise mit einer Innenwand des Segments 12 in Eingriff.

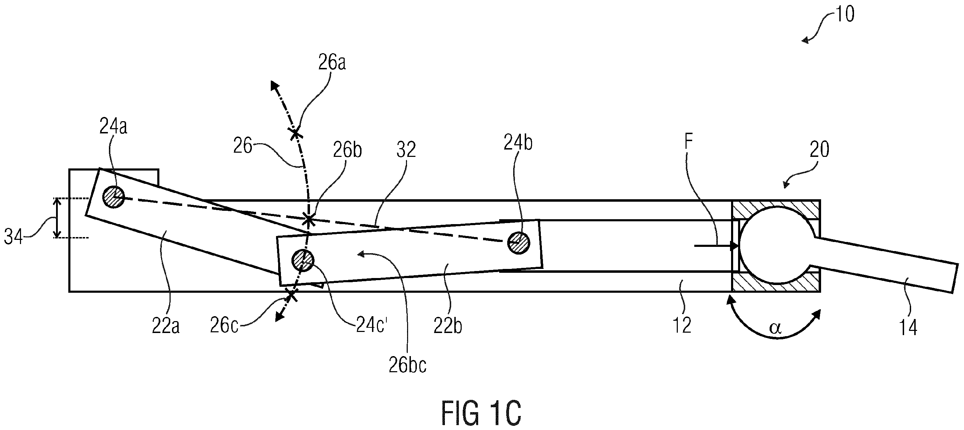

Fig. 1c zeigt den Gelenkarm 10 in der Darstellung aus Fig. 1b, wobei im Folgenden insbesondere auf einen weiteren Aspekt des Kniehebelmechanismus 22 eingegangen wird. Entsprechend einem weiteren Ausführungsbeispiel kann der Kniehebelmechanismus 22 derart ausgeführt sein, dass innerhalb eines Abschnitts 26bc der Bewegungsbahn 26 die Arretierkraft F gehalten wird. Der Abschnitt 26bc ist durch die zwei Punkte 26b und 26c bestimmt und liegt innerhalb des statisch überbestimmten Bereichs 26ac (vgl. Fig. 1b). Der Punkt 26b stellt den Schnittpunkt einer Verbindungsgerade 32 zwischen den zwei Drehpunkten 24a und 24b' mit der Bewegungsbahn 26 dar. Der Punkt 26b kann auch als Totpunkt 26b bezeichnet werden, da bis zu diesem die Arretierkraft F zunimmt und ab diesem die Arretierkraft F infolge der Reduzierung der Stauchung des Kniehebelmechanismus 22 wieder abnimmt. Ab diesem Totpunkt 26b wird der Drehpunkt 24c' bis zu dem Anschlag 26c infolge der in dem Kniehebelmechanismus 22 gespeicherten Federspannung bewegt, wobei die Bewegung durch den Anschlag 26c begrenzt ist. Um diesen Totpunkt 26b auszubilden, ist der Abstand 32 zwischen dem ersten Drehpunkt 24a und dem zweiten Drehpunkt 24b in der nicht-gestauchten Position kleiner als die absolute Länge der zwei miteinander verbundenen Hebelarme 22a und 22b. Um den Über-Totpunktbereich 26bc auszubilden ist die Geometrie der zwei Drehpunkte 24a und 24c zueinander so angeordnet, dass der Drehpunkt 24c' sich über den Totpunkt 26b hinausbewegen kann. Bei diesem Ausführungsbeispiel wird dies dadurch erreicht, dass der Drehpunkt 24a gegenüber dem Drehpunkt 24b lateral um den Abstand 34 versetzt ist. In dieser Position 26c des Drehpunkts 24c' wird die Arretierkraft F gehalten, wobei die Position 24c' nur durch eine externe Kraft lösbar ist. Also besteht gemäß diesem Ausführungsbeispiel der Vorteil, dass der Kniehebelmechanismus 22 in eine Position 26c einschnappt, in der er die Arretierkraft F aufrechterhalten wird.

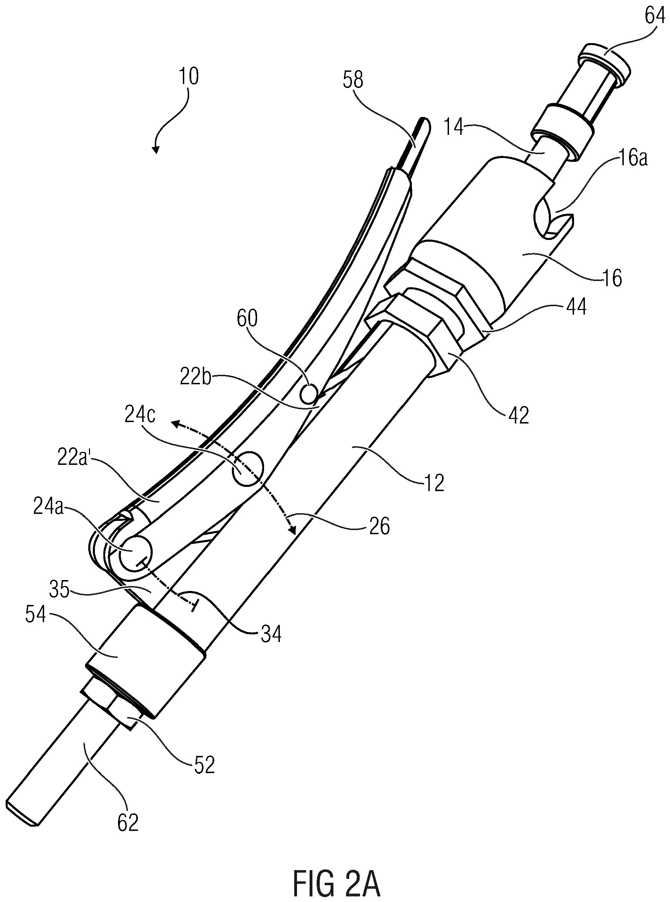

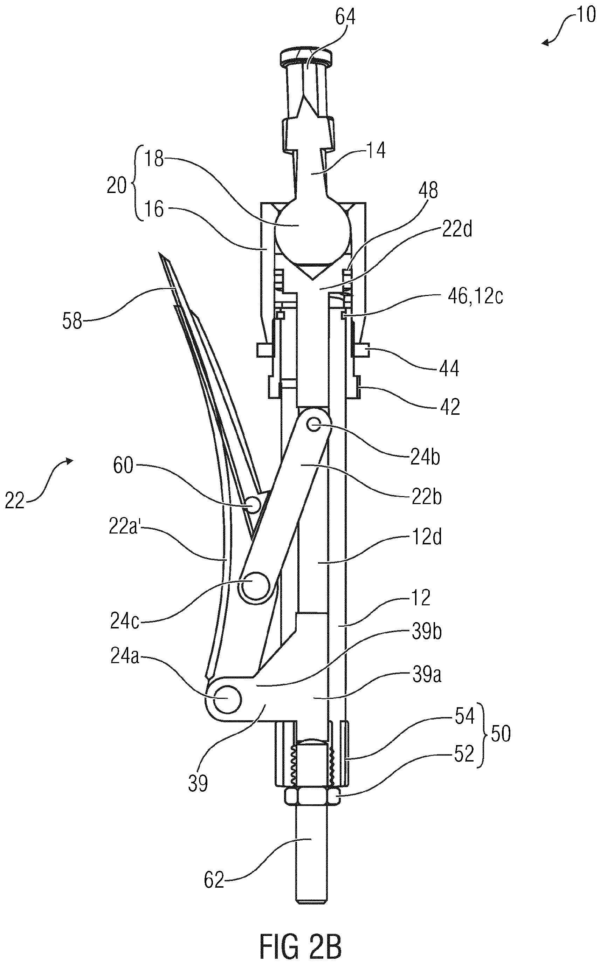

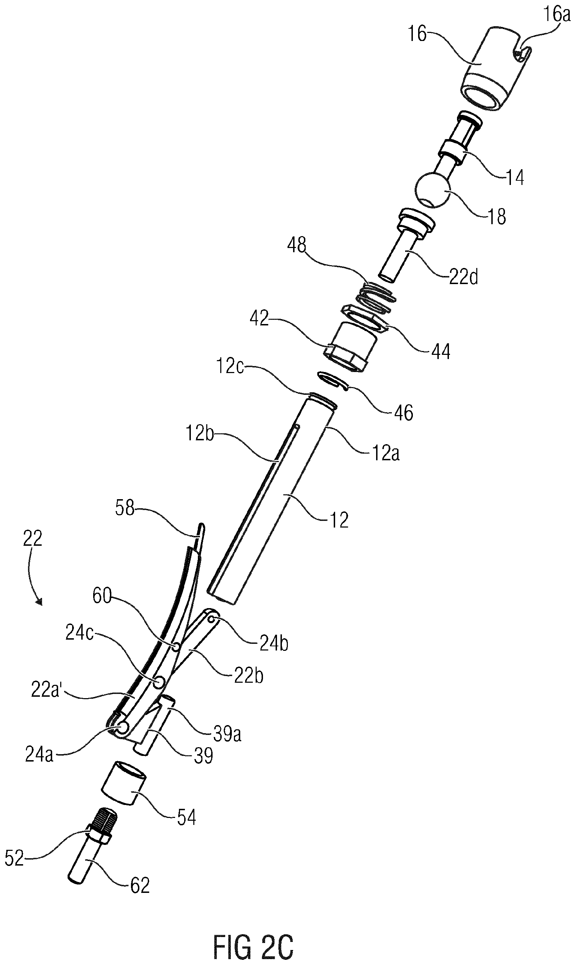

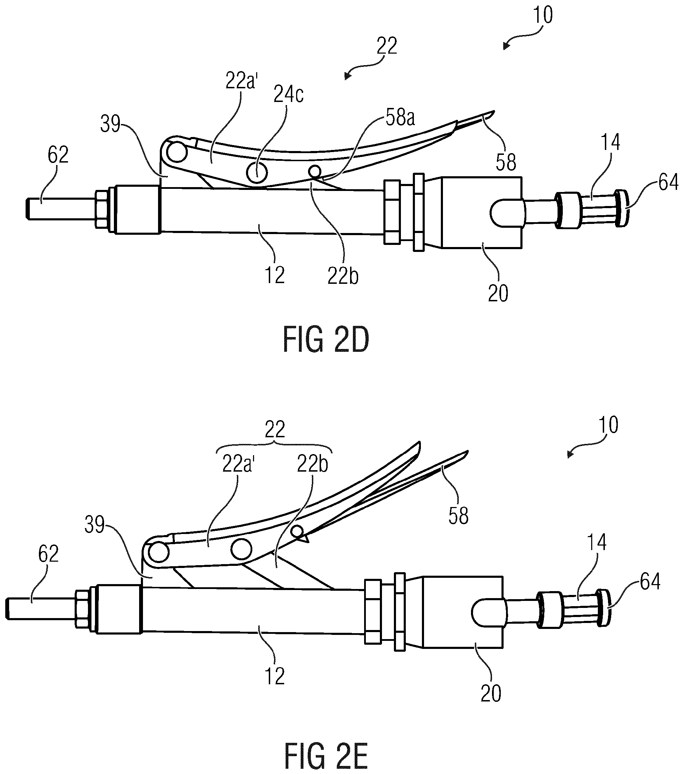

Nachfolgend wird Bezug nehmend auf Fig. 2 ein detailliertes Ausführungsbeispiel des Gelenkarms 10 mit weiteren optionalen Merkmalen beschrieben. Fig. 2a zeigt einen weiteren Gelenkarm 10 mit einem ersten Segment 12 und einem zweiten Segment 14.

Wie insbesondere aus Fig. 2a hervorgeht, weist der Gelenkarm 10 sowohl den ersten Hebel 22a als auch den zweiten Hebel 22b auf, wobei der erste Hebel 22a zu einem Griff 22a' verlängert ist. Der Griff erstreckt sich längs des ersten Segments 12 und ermöglicht so die Bewegung des Drehpunkts 24c entlang der gekrümmten Bewegungsbahn 26 durch einfaches Eingreifen bzw. Zusammendrücken des Hebels 22a' gegenüber dem Segment 12, das den entgegengesetzten Griff ausbildet. Der Griff 22 ist verlängert, um um den Drehpunkt 24a einen Hebelarm aufzuspannen, der eine Reduzierung der Bedienkräfte bei der Bewegung des Drehpunkts 24c entlang der Rotationsachse 26 ermöglicht. Die Kniehebelgeometrie 22 kann in anderen Worten insofern beschrieben werden, dass der erste Hebel 22a' parallel zu dem Hauptkörper 12 verläuft, während der zweite Hebelarm 22b zu dem Gelenkkopf 18 zeigt bzw. unter Zuhilfenahme des Reibkolbens 22d mit diesem in Eingriff bringbar ist, so dass das Gelenk 20 durch Reibung zwischen dem Reibkolben 22d und dem Gelenkkopf 18 in einer stationären Position gehalten werden kann. Insofern ähnelt die Anordnung des ersten Segments 12 und des Griffs 22a' zusammen mit dem dazwischenliegenden Kniehebelmechanismus 22 einer Schweißerzange (Vice Grip).

Entsprechend Ausführungsbeispielen ist der zylinderförmigen Kolben 22d, welches in einem Kanal 12d des röhrenförmigen ersten Segments 12 angeordnet ist, an einer dem Gelenk 20 zugewandten Stirnseite an die Form des zweiten Gelenkelements 18, hier an die Kugelform angepasst und weist deshalb eine (invertierte) konusförmige Kopfform oder eine halbrunde Kopfform auf.

Entsprechend weiteren Ausführungsbeispielen ist das erste Gelenkelement 16 als schraubbares Kugelkopfgehäuse 16 ausgeführt und auf das röhrenförmige Segment 12 aufgeschraubt. Hierzu weist das röhrenförmige Segment 12 einen Verbindungsabschnitt 12a, mit beispielsweise einem Gewinde oder einer Nut 12c, auf.

Es sei an dieser Stelle angemerkt, dass das röhrenförmige Segment 12 geschlitzt ausgeführt ist bzw. einen Longitudinalschlitz 12b aufweist, wie insbesondere aus Fig. 2c hervorgeht. Der Longitudinalschlitz 12b dient dazu, dass der Kniehebelmechanismus 22 außerhalb des Segments 12 angeordnet sein kann, wobei dieser über den Drehpunkt 24b, der sich innerhalb des röhrenförmigen Segments 12 bewegt, mit dem zylinderförmigen Kolben 22d (Reibkolben) verbunden ist. Nachfolgend wird der Gelenkkopf 20 im Detail erläutert.

Entsprechend Ausführungsbeispielen umfasst das Gelenk 20 den Kugelkopf 18 des zweiten Segments 14, der zwischen der Gelenkpfanne 16 und dem Reibkolben 22d angeordnet ist. Wie insbesondere Fig. 2b zu entnehmen ist, ist in diesem Ausführungsbeispiel das erste Gelenkelement 16 nicht direkt auf das erste Segment 12 aufgeschraubt, sondern mittels einer Hülse 42 befestigt. Die Hülse 42 weist ein Außengewinde zur Befestigung des ersten Gelenkelements 16 auf. Hierbei kann auch eine optionale Kontermutter 44 verwendet werden, mittels welcher das erste Gelenkelement 16 auf der Hülse 42 gesichert wird. Die Hülse 42 ist auf das rohrförmige erste Segment 12 aufgeschoben und mittels eines Klemmrings 46 befestigt, der in die Nut 12c eingreift. Somit bildet der Klemmring 46 zusammen mit der Nut 12c einen Anschlag für die Hülse 42 in eine erste Richtung. In entgegengesetzter Richtung wird das Gelenk 20 entsprechend durch eine Eingriffnahme zwischen dem Kugelkopf 18 und der Stirnseite des zylindrischen Segments 12 gesichert. In dem dargestellten Ausführungsbeispiel weist der zylinderförmige Kolben 22d eine derartige Form auf, dass dieses auf der ersten Seite mit dem Kugelkopf 18 und auf der gegenüberliegenden zweiten, Seite mit der Stirnseite des zylinderförmigen Segments 12 in Eingriff ist. Durch eine derartige Anordnung ist es möglich, dass der Kugelkopf 18 mit genügend Spiel in dem ersten Gelenkelement 16 gelagert ist, so dass eine Bewegung des zweiten Segments 14 mittels des Kugelgelenks 20 möglich ist.

Entsprechend weiteren Ausführungsbeispielen kann zwischen der Stirnseite des zylinderförmigen Segments 12 und der ersten Seite des zylinderförmigen Kolbens 22d eine Feder 48 vorgesehen sein. Durch die Feder 48 kann ein konstanter Druck zwischen dem Reibkolben 22d und dem Kugelkopf 18 aufrechterhalten werden, so dass in einem Zustand mit niedriger Last oder in einem lastfreien Zustand die Position des zweiten Segments 14 gegenüber dem ersten Segment 12 erhalten bleibt, selbst wenn die Kniegelenkanordnung 22 nicht in Eingriff ist. Die Federkraft kann optional über die Gewindeverbindung zwischen dem ersten Gelenkteil 16 und der Hülse 44 eingestellt werden.

Das Kugelgehäuse 16 ist entsprechend Ausführungsbeispielen in der Art geformt, dass der Kugelkopfansatz 14 bzw. das zweite Segment 14 mit einem bestimmen Kippwinkel, z.B. bis 45° oder bis 60°, abgewinkelt werden kann. Ferner kann der Kugelkopf 16 optional an mindestens einer Position des Drehkreissegments eine Aussparung 16a aufweisen, die es dem Kugelkopfansatz 14 ermöglicht, in einem größeren Winkelbereich, z.B. bis zum 90°, abgewinkelt zu werden.

Wie insbesondere Bezugnehmend Fig. 2c zu erkennen ist, ist der Drehpunkt 24a durch ein Hebelbefestigungselement 39 festgelegt, was analog zu dem Kolbenelement 22d in dem Kanal 12d verschiebbar gelagert ist. Das Hebelbefestigungselement 39 ist so ausgeführt, dass der Drehpunkt 24a lateral gegenüber der Längsachse des Elements 12 um den Abstand 34 versetzt ist. Das Hebelbefestigungselement 39 weist eine zylinderförmige Basis 39a, die in dem Kanal 12d gleitet, und ein aus dem Longitudinalschlitz 12 herausragendes, um den Abstand 34 beabstandetes Auge 39b auf, das beispielsweise zusammen mit einem Bolzen den Drehpunkt 24a bildet.

In diesem Ausführungsbeispiel erstreckt sich der Longitudinalschlitz 12b ab dem Eingriffnahmeabschnitt 12a bis zu dem anderen Ende längs des Segments 12, so dass hier der Kniehebelmechanismus 22 einfach eingeschoben werden kann. Um die laterale Position des Drehpunkts 24a bzw. des Hebelbefestigungselements 39 zu bestimmen ist an dem zweiten Ende des röhrenförmigen Segments 12 ein Anschlag 50 vorgesehen. Entsprechend Ausführungsbeispielen kann der Anschlag 50 durch eine Schraube 52 mit einer Hülse 54 gebildet sein, die mit dem Hebelbefestigungselement 39 in Eingriff ist. Das Schraubelement 52 ist beispielsweise über ein Innengewinde in das Segment 12 eingeschraubt. Die Schraube 52 dient der Krafteinstellung, da über diese der maximale Abstand zwischen den zwei Drehpunkten 24a und 24b eingestellt werden kann. Zur einfachen Bedienung kann die Schraube 52 als Riffelschraube oder als Flügelschraube ausgeführt sein, so dass diese mit der Hand bedienbar ist. Es sei an dieser Stelle angemerkt, dass die maximal ausübbare Arretierkraft F durch die Flexibilität bzw. Steifigkeit des Kniehebelmechanismus 22 definiert wird.

Entsprechend Ausführungsbeispielen kann der Kniehebelmechanismus 22 einen Freigabehebel 58 aufweisen, der mit einem weiteren Drehpunkt 60 gegenüber dem ersten Hebel 22a' drehbar gelagert ist. Der Freigabehebel 58 ist ausgebildet, um über einen (dreieckigen) Vorsprung 58a ein Rotationsmoment um den Drehpunkt 24c zwischen den zwei Hebelarmen 22a' und 22b einzubringen. Wie anhand von Fig. 2d und 2e deutlich wird, dient dieses Rotationsmoment dazu, die Arretierungsposition (vgl. Fig. 1 Bereich 26bc) des Kniehebelmechanismus 22 zu lösen und den Drehpunkt 24c aus dem Bereich 26ac bzw. 26bc hinauszubewegen. Der Freigabehebel 58 ermöglicht es dem Nutzer also, den Kniehebelmechanismus durch einfache Betätigung aufschnappen zu lassen.

Wie ferner aus Fig. 2d deutlich wird, kann der dreieckige Vorsprung 58a des Freigabehebel 58 auch den Anschlag 26c für den Kniehebelmechanismus 22 bilden, so dass die Bewegungsbahn 26 durch den dreieckförmigen Vorsprung 58a bzw. dem Winkel des dreieckförmigen Vorsprungs 58a begrenzt ist.

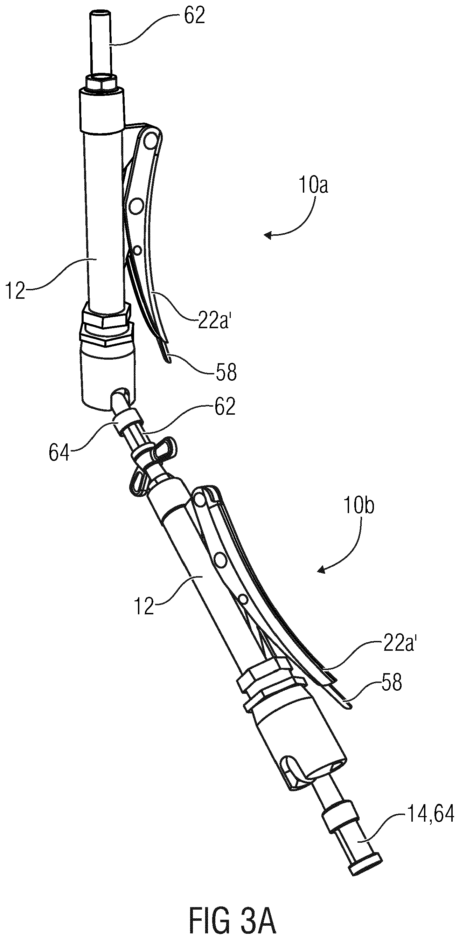

Entsprechend weiteren Ausführungsbeispielen weist der Gelenkhebel 10 auf der Seite des Schraubelements 52 einen Flansch oder Verbindungssatz 62. Der Verbindungssatz 62 kann beispielsweise als Gewindestange ausgeführt sein, welche in die Einstellschraube 52 eingeschraubt ist oder Teil der Einstellschraube 52 ist. Entsprechend hierzu kann optional das zweite Segment 14 ebenfalls einen Flansch oder Verbindungssatz 64 aufweisen, der das Gegenstück zu dem Verbindungssatz 62 bildet und beispielsweise eine Gewindehülse mit einem Innengewinde umfasst. So können vorteilhafterweise zwei Gelenkelemente 10 miteinander verbunden werden, wie in Fig. 3a gezeigt ist.

Fig. 3a zeigt ein System mit zwei Gelenkarmen 10a und 10b, wobei der erste Gelenkarm 10a über sein Verbindungselement 62 mit dem zweiten Gelenkarm 10b über das Verbindungselement 64 verbunden ist. So wird also ein System mit zwei Gelenkarmen 10a und 10b geschaffen, wobei jedes der Gelenkarme einfach mittels einer Einhandbedienung (Bedienelemente: Griff 22a', Gegengriff 12, Freigabehebel 58) bedient, d.h. gelöst, neupositioniert und wieder verschlossen werden kann.

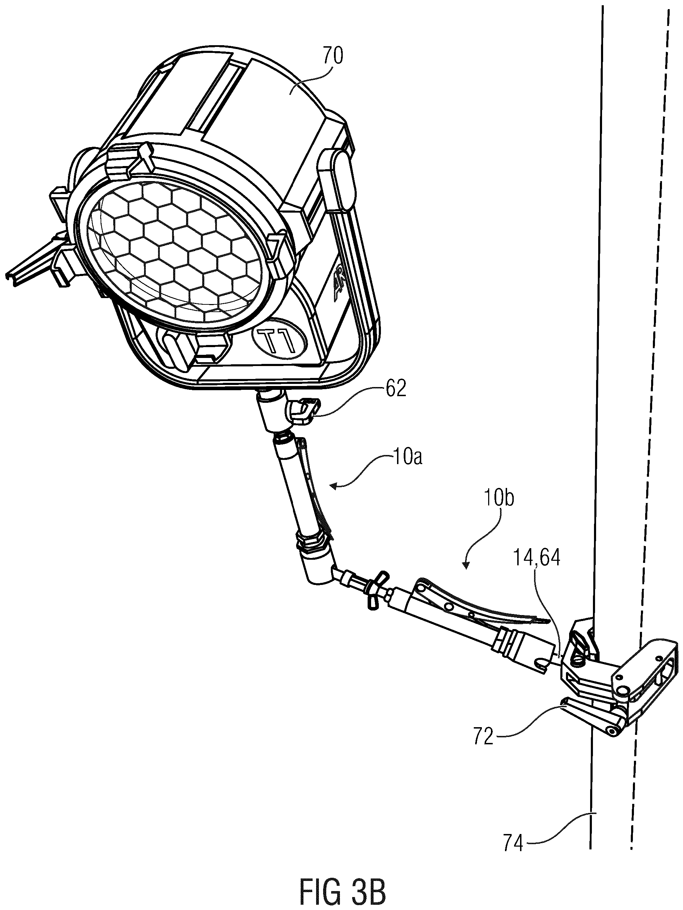

Fig. 3b zeigt eine Anwendung des Systems mit den zwei Gelenkarmen 10a und 10b, wobei das erste Segment 12 über das Verbindungselement 62 des ersten Gelenkarms 10a mit einem Beleuchtungselement 70 verbunden ist, während der zweite Gelenkarm 10b über das Verbindungselement 64 mit einer Klemme bzw. Universalklemme 72 verbunden ist, welche an ein Rohr 74, z.B. an das Rohr einer Traverse, befestigt ist. Insofern ist es möglich das Beleuchtungselement 70 über die zwei Gelenkarme 10a und 10b (entsprechend 2 x 3 Freiheitsgraden) zu positionieren.

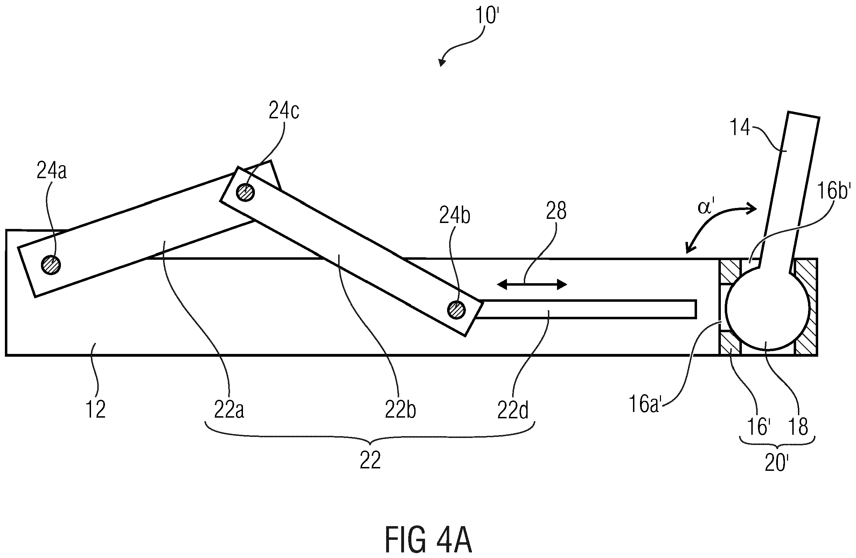

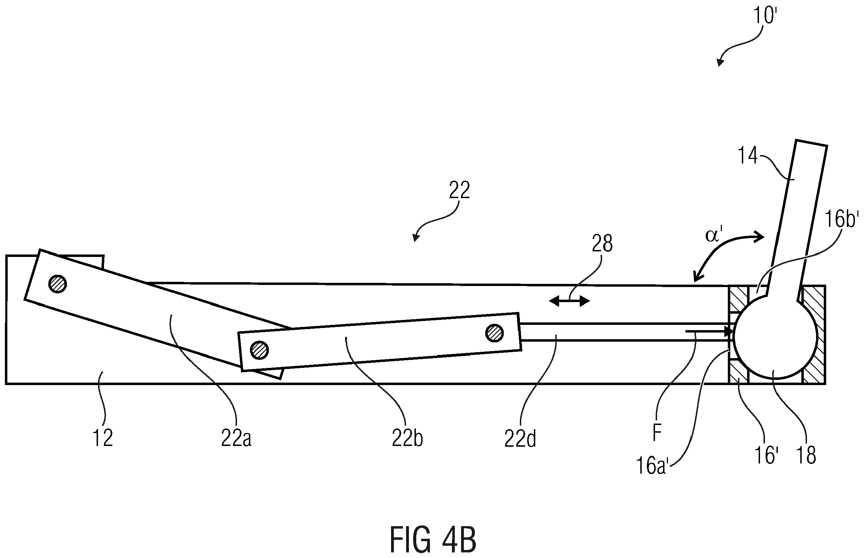

Bezug nehmend auf Fig. 1 sei angemerkt, dass der Kippwinkel α zwischen dem ersten Segment 12 und dem zweiten Segment 14 bzw. der resultierende Kippwinkelbereich, der beispielsweise in einem Bereich von 180° ± 45° (oder ± 90°) liegt, auch von dem oben dargestellten Kippwinkelbereich abweichen kann. Insofern kann entsprechend weiteren Ausführungsbeispielen der Kippwinkel α in Zentralposition auch gewinkelt zu der Längsachse 28 orientiert sein, um einen anderen Winkelbereich auszubilden, wie Bezug nehmend auf Fig. 4a und 4b gezeigt wird.

Fig. 4a zeigt einen weiteren Gelenkarm 10' mit den zwei Segmenten 12 und 14. Ferner umfasst der Gelenkarm 10' ein Gelenk 20' (hier wiederum ein Kugelgelenk 20') und den Kniehebelmechanismus 22. Der Kniehebelmechanismus 22 umfasst entsprechend den obigen Ausführungsbeispielen die zwei Hebelarme 22a und 22b, den Reibkolben 22d, der sich entlang der Längsachse 28 erstreckt, sowie die drei Gelenke 24a, 24b und 24c. Im Detail weist das Gelenk 20' ein erstes Gelenkelement 16' auf, bei dem die Gelenköffnung 16b' an einer Längsseite (und nicht an einer Stirnseite) des Segments 12 angeordnet ist, so dass das zweite Gelenkelement 18 gegenüber dem ersten Segment 12 gewinkelt ist. Infolgedessen befinden sich die zwei Segmente 12 und 14 (im Gegensatz zu Fig. 1) in der Zentrallage nicht auf einer Geraden (vgl. Längsachse 28), sondern sind mit einem Kippwinkel a', der beispielsweise 90° oder 135° (Zentralposition) betragen kann, gewinkelt zueinander angeordnet. Ausgehend von diesem Zentralwinkel kann ein Kippwinkel a' zwischen dem ersten Segment 12 und dem zweiten Segment 14, z.B. in einem Bereich von ± 45° oder ± 30° oder in einem anderen Bereich um den zentralen Kippwinkel a' variieren. Insofern erstreckt sich der resultierende Kippwinkelbereich beispielsweise zwischen 45° und 135° oder zwischen 60° und 120° (bezogen auf die Längsachse 28). Die Arretierung des Gelenks 20' erfolgt wie bei den obigen Ausführungen über den Kniehebelmechanismus 22, wie in Fig. 4b dargestellt ist.

Fig. 4b zeigt den Gelenkarm 10' in der Arretierposition. Hierbei ist der Reibkolben 22d mit der Oberfläche des zweiten Gelenkelements 18 bzw. des Kugelkopfes 18 in Eingriff, so dass auf dieses die Arretierkraft F entlang der Längsachse 28 ausübbar ist. Wie Fig. 4b ferner zu entnehmen ist, liegen Gelenköffnung 16b' und der Reibkolben 22d nicht mehr (wie bei obigen Ausführungsbeispielen) einander gegenüber bzw. auf einer Geraden, sondern sind gewinkelt zueinander angeordnet. Insofern ist auch die Gelenköffnung, über die der Kolben 22d eingreifen kann, gewinkelt gegenüber der Öffnung 16b'. Da bei diesem Ausführungsbeispiel aus Fig. 4a und 4b der Kniehebelmechanismus 22 grundsätzlich dieselbe Struktur und Funktionalität wie oben beschrieben aufweist, ist es für den Fachmann klar, dass auch die einzelnen Aspekte, die insbesondere hinsichtlich Fig. 2 beschrieben wurden, auf das Ausführungsbeispiel aus Fig. 4a und 4b angewendet werden können.

Bezug nehmend auf Fig. 1 sei angemerkt, dass das erste Segment 12 und das erste Gelenkelement 16 stoffschlüssig miteinander verbunden sein können, so dass also das erste Gelenkelement 16 in das erste Segment 12 integriert ist bzw. eine Einheit bilden. Analog hierzu kann auch das zweite Segment 14 mit dem zweiten Gelenkelement 18 stoffschlüssig verbunden sein bzw. eine Einheit bilden.

Bezug nehmend auf Fig. 1a und 1b sei angemerkt, dass die Oberfläche des zweiten Gelenkelements 18 nicht zwingendermaßen zur Eingriffnahme mit dem ersten Gelenkelement 16 dienen muss, sondern dass die Lagerung zwischen den zwei Gelenkelementen 16 und 18 auch anders, beispielsweise über einen zentralen Bolzen (für den Fall eines einfachen Rotationsgelenks) erfolgen kann. Insofern ist es auch nicht erforderlich, dass das erste Gelenkelement 16 als Gelenkpfanne ausgeführt ist, sondern kann alternativ auch durch eine einfache Bohrung in Kombination mit einem Bolzen gebildet sein.

Bezug nehmend auf Fig. 1a und 1b sei ferner angemerkt, dass der Kniehebel 22 auch anders gestaltet sein kann, wobei insbesondere durch Variation der Länge der Hebel 22a und 22b eine Veränderung der Bedienkräfte im Vergleich zu den Arretierungskräften F erreicht werden kann.

Bezug nehmend auf Fig. 2d und 2e sei angemerkt, dass der Kniehebelmechanismus 22 unterschiedliche Winkelausprägungen aufweisen kann, die von dem maximalen Abstand 32, dem lateralen Versatz 34 und von dem Verhältnis der Längen der Hebel 22a und 22b abhängig sind. Im Folgenden werden exemplarische Bedingungen für eine ergonomisch günstige Geometrie erläutert. Es hat sich gezeigt, dass die Ergonomie des Kniehebelmechanismus 22 besonders gut ist, wenn bei diesem in der entriegelten Position (vgl. Fig. 2e) die drei Drehpunkte 24a, 24b und 24c und das Hebelbefestigungselement 39 als Polygon angeordnet sind, wobei die Drehpunkte 24a, 24b und 24c in der verriegelten Position ist (vgl. Fig. 2d) im Wesentlichen entlang einer Geraden angeordnet sind und somit zusammen mit dem Befestigungselement 39 ein rechtwinkliges Dreieck bilden.

Hinsichtlich Fig. 2 ist anzumerken, dass die Gelenke 24a, 24b und 24c, die bei obiger Ausführung insbesondere als Gelenke mit Stiften beschrieben wurden, auch anders ausgeführt sein können. So können die oben beschriebenen Drehgelenke 24a, 24b und 24c durch Scharniere oder andere Drehgelenke, die beispielsweise eine Niet oder Schraube und eine Bohrung oder Öse umfassen, gebildet sein.

Bezug nehmend auf Fig. 2 sei angemerkt, dass die Hülse 44 nicht zwingend mittels eines Formschlusses durch das Klemmelement 46 und die Klemmnut 12c auf dem ersten Segment 12 befestigt sein muss, sondern auch aufgeschraubt sein kann, wobei angemerkt sei, dass die in Fig. 2 dargestellte Verbindung 46 und 12c den Vorteil hat, dass hier ein Drehen des Gelenks 20 ermöglicht wird, so dass beispielsweise die Aussparung 16a in die gewünschte Position gebracht werden kann.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als ein entsprechender Verfahrensschritt oder als ein Merkmal des Verfahrensschritts zu verstehen ist. Analog dazu stellen Aspekte, die im Zusammenhang mit einem oder als ein Verfahrensschritt beschrieben wurde, auch eine Beschreibung eines entsprechenden Blocks oder Details oder Merkmals einer entsprechenden Vorrichtung dar.

Weitere Ausführungsbeispiele beziehen sich auf ein Verfahren zur Bedienung des oben beschriebenen Gelenkarms, wobei das Verfahren den Schritt des Spannens des Kniehebelmechanismus 22 umfasst. Bei dem Spannen wird die Arretierkraft F auf die Oberfläche des zweiten Gelenkelements 18 in Richtung einer Flächennormalen der Oberfläche ausgeübt.

Weitere Ausführungsbeispiele beziehen sich auf ein Verfahren zur Herstellung des oben beschriebenen Gelenkarms 10. Das Verfahren umfasst hierbei den Schritt des Einbauens des Kniehebelmechanismus 22, wie in Fig. 2c gezeigt ist. Hierbei wird der (vormontierte) Kniehebelmechanismus 22 in das erste Segment 12 eingebaut, so dass dieser ausgebildet ist, um die Arretierkraft F auf die Oberfläche des zweiten Gelenkelements 18 in Richtung einer Flächennormalen auszuüben. Die Kraftrichtung für die Arretierkraft F wirkt in Richtung einer Flächennormalen auf die Oberfläche des runden bzw. kugelförmigen Elements 18, wobei sich die Flächennormale entlang der Längsrichtung des ersten Segments 12 erstreckt.

Gemäß Ausführungsbeispielen des obigen Gelenkarms 10, 10a, 10b kann das erste Lager 24a, das zweite Lager 24b, 24b' und das gemeinsame Scharnier 24c, 24c' einen Niet, Stift, Bolzen und/oder eine Schraubelement umfassen.

Gemäß Ausführungsbeispielen des obigen Gelenkarms 10, 10a, 10b kann das erste Segment 12 ein Rohr, Hohlrohr oder U-Profil umfassen, das ausgebildet ist, eine axiale Führung 12d des ersten und/oder zweiten Lagers 24a, 24b, 24b' entlang der Längsachse (28) zu ermöglichen.

Gemäß Ausführungsbeispielen des obigen Gelenkarms 10, 10a, 10b kann auf das Gewinde der Hülse 42 eine Kontermutter 44 zur Sicherung des Kugelkopfgehäuses 16 aufgeschraubt sein.

Gemäß Ausführungsbeispielen des obigen Gelenkarms 10, 10a, 10b kann das Gelenk 20 eine Feder 48 umfassen, die ausgebildet ist, eine Federkraft zwischen dem ersten Gelenkelement 16 und dem zweiten Gelenkelement 18 zu bewirken, wobei die Federkraft als weitere Arretierkraft wirkt, und wobei die weitere Arretierkraft kleiner ist als die Arretierkraft F.

Gemäß Ausführungsbeispielen des obigen Gelenkarms 10, 10a, 10b kann das erste Segment 12 und das zweite Segment 14 einen Kippwinkel α einschließen, der innerhalb eines Bereiches von 180° +/- 45° oder innerhalb eines Bereiches von 180° +/- 90° beschränkt ist.

Gemäß Ausführungsbeispielen des obigen Gelenkarms 10, 10a, 10b kann das erste Segment 12 und das zweite Segment 14 einen Kippwinkel α' einschließen, der innerhalb eines Bereiches von α'+/-45° oder innerhalb eines Bereiches von α' +/- 90° beschränkt ist, wobei α' kleiner als 180° ist.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Gelenkarm (10, 10a, 10b) mit folgenden Merkmalen:
einem ersten Segment (12) und einem zweiten Segment (14), wobei das erste Segment (12) mit einem ersten Gelenkelement (16) verbunden ist und das zweite Segment (14) mit einem zweiten Gelenkelement (18) verbunden ist, und wobei das erste und das zweite Gelenkelement (18) derart in Eingriff sind, dass sie ein Drehgelenk (20) formen,
wobei das zweite Gelenkelement (18) eine Oberfläche mit zumindest partiell konstantem Krümmungsradius aufweist, und
wobei das erste Segment (12) einen Kniehebelmechanismus (22) aufweist, der ausgebildet ist, um eine Arretierkraft (F) auf die Oberfläche des zweiten Gelenkelements (18) in Richtung einer Flächennormalen der Oberfläche auszuüben,
wobei der Kniehebelmechanismus (22) einen ersten Hebel (22a, 22a') und einen zweiten Hebel (22b) umfasst, die mittels eines gemeinsamen Scharniers (24c, 24c') miteinander verbunden sind,
wobei der erste Hebel (22a, 22a') mittels eines ersten Lagers (24a) gegenüber dem ersten Segment (12) gelagert ist, so dass eine Drehung des ersten Hebels (22a, 22a') gegenüber dem ersten Segment (12) um einen ersten Drehpunkt (24a) ermöglicht wird und so dass weitere Freiheitsgrade eingeschränkt und/oder unterbunden werden, und
wobei der zweite Hebel (22b) mittels eines zweiten Lagers (24b, 24b') gegenüber dem ersten Segment (12) gelagert ist, so dass eine Drehung des zweiten Hebels (22b) gegenüber dem ersten Segment (12) um einen zweiten Drehpunkt (24b, 24b') ermöglicht wird, wobei der zweite Drehpunkt (24b, 24b') entlang der Längsachse (28) des ersten Segments (12) verschiebbar ist, und so dass weitere Freiheitsgrade eingeschränkt und/oder unterbunden werden,
**dadurch gekennzeichnet,**
**dass** ein maximaler Abstand (32) zwischen dem ersten und dem zweiten Drehpunkt (24a, 24b, 24b') derart beschränkt ist, dass entlang der Bewegungsbahn (26) des gemeinsamen Scharniers (24c, 24c') des ersten und des zweiten Hebels (22a, 22a', 22b) um den ersten Drehpunkt (24a) der statisch überbestimmten Bereich (26ac) ausgebildet wird, und dass das erste Lager (24a) so ausgebildet ist, dass der erste Drehpunkt (24a) außerhalb der Längsachse (28) des ersten Segments (12) angeordnet ist.

2. Gelenkarm (10, 10a, 10b) gemäß Anspruch 1 wobei der Kniehebelmechanismus (22) einen Freigabehebel (58) aufweist, der so zwischen dem ersten und dem zweiten Hebel (22a, 22a', 22b) angeordnet ist, dass bei Betätigung des Freigabehebels (58) ein Drehmoment auf das gemeinsamen Scharnier (24c, 24c') wirkt, um das gemeinsame Scharnier (24c, 24c') auf der Bewegungsbahn (26) aus der Abschnitt (26bc) des statisch überbestimmten Bereichs (26ac) über den ersten Punkt (26b) hinaus zu bewegen.

3. Gelenkarm (10, 10a, 10b) gemäß Anspruch 1 oder 2, wobei das Drehgelenk (20) ein Kugelgelenk ist, und die Oberfläche ein Kugeloberflächensegment umfasst.

4. Gelenkarm (10, 10a, 10b) gemäß einem der Ansprüche 1 bis 3, wobei der Kniehebelmechanismus (22) ausgebildet ist, um die Arretierkraft entlang der Längsachse (28) des ersten Segments (12) auszuüben.

5. Gelenkarm (10, 10a, 10b) gemäß einem der Ansprüche 1 bis 4, wobei der Kniehebelmechanismus (22) ausgebildet ist, um bei der Drehung des ersten Hebels (22a, 22a') um den ersten Drehpunkt (24a) eine Verschiebung des zweiten Drehpunkts (24c, 24c') entlang der Längsachse (28) des ersten Segments (12) zu erreichen und/oder um innerhalb eines statisch überbestimmten Bereichs (26ac) die Arretierkraft (F) über den zweiten Drehpunkt (24b, 24b') auf die Oberfläche auszuüben.

6. Gelenkarm (10, 10a, 10b) gemäß einem der Ansprüche 1 bis 5, wobei der zweite Drehpunkt (24b, 24b') auf der Längsachse (28) des ersten Segments (12) liegt.

7. Gelenkarm (10, 10a, 10b) gemäß einem der Ansprüche 1 bis 6, wobei innerhalb eines Abschnitts (26bc) die Arretierkraft (F) gehalten wird; und/oder
wobei der Abschnitt (26bc) des statisch überbestimmten Bereichs (26ac) durch einen ersten Punkt (26b) und einen zweiten Punkt (26c) auf der Bewegungsbahn (26) des gemeinsamen Scharniers (24c, 24c') begrenzt ist, wobei der ersten Punkt (26b) ein Schnittpunkt der Bewegungsbahn (26) des gemeinsamen Scharniers (24c, 24c') mit einer Geraden (32) ist, die den ersten und den zweiten Drehpunkt (24a, 24b, 24b') und das gemeinsame Scharnier (24c, 24c') miteinander verbindet; und wobei in dem zweiten Punkt (26c) das erste Segment (12) für den ersten Hebel (22a, 22a') einen Anschlag (26c) bildet; und/oder
wobei der erste Hebel (24a) gegenüber dem ersten Segment (12) entlang der Längsachse (28) des ersten Segments (12) verschiebbar gelagert ist, so dass ein maximaler Abstand (32) zwischen dem ersten und dem zweiten Drehpunkt (24a, 24b, 24b') einstellbar ist; und/oder
wobei das erste Segment (12) ein Gewinde auf einer ersten Seite aufweist, mittels welchem ein Schraubelement (52) zur Verstellung des ersten Drehpunkts (24a) entlang der Längsachse (28) einschraubbar ist.

8. Gelenkarm (10, 10a, 10b) gemäß einem der Ansprüche 1 bis 7, wobei der zweite Hebel (22b) mit einem Kolben (22d) über das zweite Lager (24b, 24b') verbunden ist, wobei der Kolben (22d) axial auf der Längsachse (28) des ersten Segments (12) verschiebbar ist, um die Arretierkraft (F) entlang der Längsachse (28) auf die Oberfläche auszuüben; und/oder
wobei der Kolben (22d) eine an die Oberfläche angepasste Kopfform aufweist.

9. Gelenkarm (10, 10a, 10b) gemäß einem der Ansprüche 2 bis 8, wobei das erste Gelenkelement (16) eine Gelenkpfanne (16) umfasst und wobei das zweite Gelenkelement (18) einen Kugelkopf (18) mit dem Kugeloberflächensegment umfasst; und/oder
wobei die Gelenkpfanne (16) den Kugelkopf (18) so umschließt, dass Kippwinkel in einen Drehkreissegment eingeschränkt sind; und/oder
wobei die Gelenkpfanne (16) zumindest einen Aussparung (16a) aufweist, die in einem weiteren Drehkreissegment, das an das Drehkreissegment anschließt, einen Kippwinkel zulässt, der größer ist als die eingeschränkten Kippwinkel; und/oder
wobei das erste Segment (12) auf einer zweiten Seite eine Hülse (42) mit einem Gewinde aufweist, mittels welchem ein Kugelgehäuse (16), welches die Gelenkpfanne (16) umfasst, aufgeschraubt ist.

10. Gelenkarm (10, 10a, 10b) gemäß einem der Ansprüche 1 bis 9, wobei das erste Segment (12) auf einer ersten Seite einen ersten Flansch (62) aufweist und wobei das zweite Segment (14) auf einer zweiten Seite, die der ersten Seite des ersten Segments (12) abgewandt ist, einen zweiten Flansch (64) aufweist, der mit einem ersten Flansch (62) eines weiteren Gelenkarms (10, 10a, 10b) verbindbar ist.

11. Gelenkarm (10, 10a, 10b) gemäß einem der Ansprüche 1 bis 10,
wobei der Kniehebelmechanismus (22) ausgebildet ist, um bei der Drehung des ersten Hebels (22a, 22a') um den ersten Drehpunkt (24a) eine Verschiebung des zweiten Drehpunkts (24c, 24c') entlang der Längsachse (28) des ersten Segments (12) zu erreichen und/oder um innerhalb eines statisch überbestimmten Bereichs (26ac) die Arretierkraft (F) über den zweiten Drehpunkt (24b, 24b') auf die Oberfläche auszuüben, und
wobei der erste Hebel (22a) zu einem Griff (22a') verlängert ist, mittels der Kniehebelmechanismus (22) bedienbar ist.

12. Gelenkarm-System, mit folgenden Merkmalen:
einem ersten Gelenkarm (10a) gemäß Anspruch 11 und einem zweiten Gelenkarm (10b) gemäß Anspruch 11,
wobei der zweite Flansch (64) des ersten Gelenkarms (10, 10a, 10b) mit dem ersten Flansch (62) des zweiten Gelenkarms (10, 10a, 10b) verbunden ist.

13. Verfahren zur Herstellung eines Gelenkarms (10, 10a, 10b), welches ein erstes Segment (12) und ein zweites Segment (14) aufweist, wobei das erste Segment (12) mit einem ersten Gelenkelement (16) verbunden ist und das zweite Segment (14) mit einem zweiten Gelenkelement (18) verbunden ist, und wobei das erste und das zweite Gelenkelement (18) derart in Eingriff sind, dass sie ein Drehgelenk (20) formen, und wobei das zweite Gelenkelement (18) eine Oberfläche mit zumindest partiell konstantem Krümmungsradius aufweist, mit folgendem Schritt:
Einbauen eines Kniehebelmechanismus (22) in das erste Segment (12), der ausgebildet ist, um eine Arretierkraft (F) auf die Oberfläche des zweiten Gelenkelements (18) in Richtung einer Flächennormalen der Oberfläche auszuüben,
wobei der Kniehebelmechanismus (22) einen ersten Hebel (22a, 22a') und einen zweiten Hebel (22b) umfasst, die mittels eines gemeinsamen Scharniers (24c, 24c') miteinander verbunden sind,
wobei der erste Hebel (22a, 22a') mittels eines ersten Lagers (24a) gegenüber dem ersten Segment (12) gelagert ist, so dass eine Drehung des ersten Hebels (22a, 22a') gegenüber dem ersten Segment (12) um einen ersten Drehpunkt (24a) ermöglicht wird und so dass weitere Freiheitsgrade eingeschränkt und/oder unterbunden werden, und
wobei der zweite Hebel (22b) mittels eines zweiten Lagers (24b, 24b') gegenüber dem ersten Segment (12) gelagert ist, so dass eine Drehung des zweiten Hebels (22b) gegenüber dem ersten Segment (12) um einen zweiten Drehpunkt (24b, 24b') ermöglicht wird, wobei der zweite Drehpunkt (24b, 24b') entlang der Längsachse (28) des ersten Segments (12) verschiebbar ist, und so dass weitere Freiheitsgrade eingeschränkt und/oder unterbunden werden.
wobei ein maximaler Abstand (32) zwischen dem ersten und dem zweiten Drehpunkt (24a, 24b, 24b') derart beschränkt ist, dass entlang der Bewegungsbahn (26) des gemeinsamen Scharniers (24c, 24c') des ersten und des zweiten Hebels (22a, 22a', 22b) um den ersten Drehpunkt (24a) der statisch überbestimmten Bereich (26ac) ausgebildet wird,
wobei das erste Lager (24a) so ausgebildet ist, dass der erste Drehpunkt (24a) außerhalb der Längsachse (28) des ersten Segments (12) angeordnet ist.

14. Verfahren zur Bedienung eines Gelenkarms (10, 10a, 10b), das ein erstes Segment (12) und ein zweites Segment (14) aufweist, wobei das erste Segment (12) mit einem ersten Gelenkelement (16) verbunden ist und das zweite Segment (14) mit einem zweiten Gelenkelement (18) verbunden ist, und wobei das erste und das zweite Gelenkelement (18) derart in Eingriff sind, dass sie ein Drehgelenk (20) formen, und wobei das zweite Gelenkelement (18) eine Oberfläche mit zumindest partiell konstantem Krümmungsradius aufweist, und wobei das erste Segment (12) ein Kniehebelmechanismus (22) aufweist, mit folgenden Schritten:
Spannen des Kniehebelmechanismus (22), so dass eine Arretierkraft (F) auf die Oberfläche des zweiten Gelenkelements (18) in Richtung einer Flächennormalen der Oberfläche ausgeübt wird,
wobei der Kniehebelmechanismus (22) einen ersten Hebel (22a, 22a') und einen zweiten Hebel (22b) umfasst, die mittels eines gemeinsamen Scharniers (24c, 24c') miteinander verbunden sind,
wobei der erste Hebel (22a, 22a') mittels eines ersten Lagers (24a) gegenüber dem ersten Segment (12) gelagert ist, so dass eine Drehung des ersten Hebels (22a, 22a') gegenüber dem ersten Segment (12) um einen ersten Drehpunkt (24a) ermöglicht wird und so dass weitere Freiheitsgrade eingeschränkt und/oder unterbunden werden, und
wobei der zweite Hebel (22b) mittels eines zweiten Lagers (24b, 24b') gegenüber dem ersten Segment (12) gelagert ist, so dass eine Drehung des zweiten Hebels (22b) gegenüber dem ersten Segment (12) um einen zweiten Drehpunkt (24b, 24b') ermöglicht wird, wobei der zweite Drehpunkt (24b, 24b') entlang der Längsachse (28) des ersten Segments (12) verschiebbar ist, und so dass weitere Freiheitsgrade eingeschränkt und/oder unterbunden werden.
wobei ein maximaler Abstand (32) zwischen dem ersten und dem zweiten Drehpunkt (24a, 24b, 24b') derart beschränkt ist, dass entlang der Bewegungsbahn (26) des gemeinsamen Scharniers (24c, 24c') des ersten und des zweiten Hebels (22a, 22a', 22b) um den ersten Drehpunkt (24a) der statisch überbestimmten Bereich (26ac) ausgebildet wird,
wobei das erste Lager (24a) so ausgebildet ist, dass der erste Drehpunkt (24a) außerhalb der Längsachse (28) des ersten Segments (12) angeordnet ist.

## Claims

1. Articulated arm (10, 10a, 10b) with the following characteristics:
a first segment (12) and a second segment (14), wherein the first segment (12) is connected to a first hinged element (16) and the second segment (14) is connected to a second hinged element (18), and wherein the first and the second hinged elements (18) are engaged in such a way that they form a rotating joint (20),
wherein the second hinged element (18) has a surface with at least partially constant curvature radius, and
wherein the first segment (12) has a knee lever mechanism (22), which is designed to exert a locking force (F) onto the surface of the second hinged element (18) in the direction of a face normal of the surface,
wherein the knee lever mechanism (22) comprises a first lever (22a, 22a') and a second lever (22b), which are connected to each other using a common hinge (24c, 24c'),
wherein the first lever (22a, 22a') is positioned on the first segment (12) using a first bearing (24a) so that a rotation of the first lever (22a, 22a') relative to the first segment (12) around a first pivot point (24a) is possible, and so that further degrees of freedom are limited and/or restricted, and
wherein the second lever (22b) is positioned on the first segment (12) using a second bearing (24b, 24b') so that a rotation of the second lever (22b) relative to the first segment (12) around a second pivot point (24b, 24b') is possible, wherein the second pivot point (24b, 24b') can be moved along the longitudinal axis (28) of the first segment (12), and so that further degrees of freedom are limited and/or restricted,
**characterized in that**
a maximum distance (32) between the first and the second pivot point (24a, 24b, 24b') is limited in such a way that the statically over-determined area (26ac) is formed along the track of motion (26) of the common hinge (24c, 24c') of the first and the second lever (22a, 22a', 22b) around the first pivot point (24a),
and **in that**
the first bearing (24a) is designed so that the first pivot point (24a) is positioned outside the longitudinal axis (28) of the first segment (12).

2. Articulated arm (10, 10a, 10b) according to claim 1,
wherein the knee lever mechanism (22) has a release lever (58) which is positioned between the first and the second lever (22a, -22a', 22b) in such a way that activating the release lever (58) puts a torque on the common hinge (24c, 24c') to move the common hinge (24c, 24c') on the track (26) from the section (26bc) of the statically over-determined area (26ac) beyond the first point (26b).

3. Articulated arm (10, 10a, 10b) according to claim 1 or 2, wherein the rotating joint (20) is a ball joint and the surface has a ball-shaped surface.

4. Articulated arm (10, 10a, 10b) according to any one of claims 1 to 3, wherein the knee lever mechanism (22) is designed to exert the locking force along the longitudinal axis (28) of the first segment (12).

5. Articulated arm (10, 10a, 10b) according to any one of claims 1 to 4, wherein the knee lever mechanism (22) is designed to reach a displacement of the second pivot point (24c, 24c') along the longitudinal axis (28) of the first segment (12), when the first lever (22a, 22a') is rotated around the first pivot point (24a), and/or to exert the locking force (F) via the second pivot point (24b, 24b') onto the surface within a statically over-determined area (26ac).

6. Articulated arm (10, 10a, 10b) according to any one of claims 1 to 5, wherein the second pivot point (24b, 24b') lies on the longitudinal axis (28) of the first segment (12).

7. Articulated arm (10, 10a, 10b) according to any one of claims 1 to 6, wherein the locking force (F) is maintained within a section (26bc); and/or
wherein the section (26bc) of the statically over-determined area (26ac) is limited by a first point (26b) and a second point (26c) on the track of motion (26) of the common hinge (24c, 24c'), wherein the first point (26b) is a point of intersection of the track of motion (26) of the common hinge (24c, 24c') with a straight line (32) which connects the first and the second pivot point (24a, 24b, 24b') and the common hinge (24c, 24c') with each other; and wherein the first segment (12) creates a limit stop (26c) for the first lever (22a, 22a') at the second point (26c); and/or
wherein the first lever (24a) is positioned in a displaceable manner relative to the first segment (12) along the longitudinal axis (28) of the first segment (12) so that a maximum distance (32) can be set between the first and the second pivot point (24a, 24b, 24b'); and/or
wherein the first segment (12) has a thread on a first side, using which a screw element (52) can be screwed on for adjusting the first pivot point (24a) along the longitudinal axis (28).

8. Articulated arm (10, 10a, 10b) according to any one of claims 1 to 7, wherein the second lever (22b) is connected to a piston (22d) through the second bearing (24b, 24b'), wherein the piston (22d) can be displaced axially on the longitudinal axis (28) of the first segment (12) in order to exert the locking force (F) on the surface along the longitudinal axis (28); and/or
wherein the piston (22d) has a head shape adjusted on the surface.

9. Articulated arm (10, 10a, 10b) according to any one of claims 2 to 8, wherein the first hinged element (16) comprises a socket (16) and wherein the second hinged element (18) comprises a ball-shaped head (18) with the ball-shaped surface segment; and/or
wherein the socket (16) includes the ball head (18) in such a way that tilt angles are limited in a circular segment; and/or
wherein the socket (16) has at least one recess (16a) which allows a tilt angle in a further circular segment which connects to the circular segment, so that this tilt angle is larger than the limit tilt angle; and/or
wherein the first segment (12) has a hood (42) with a thread on a second side, using which a ball housing (16) which comprises the socket (16) is screwed on.

10. Articulated arm (10, 10a, 10b) according to any one of claims 1 to 9, wherein the first segment (12) has a first flange (62) on a first side and wherein the second segment (14) has a second flange (64), which can be connected with a first flange (62) of another articulated arm (10, 10a, 10b), on a second side which is turned away from the first side of the first segment (12).

11. Articulated arm (10, 10a, 10b) according to any one of claims 1 to 10,
wherein the knee lever mechanism (22) is designed to reach a displacement of the second pivot point (24c, 24c') along the longitudinal axis (28) of the first segment (12) when the first lever (22a, 22a') is turned around the first pivot point (24a) and/or to exert the locking force (F) on the surface via the second pivot point (24b, 24b') within a statically over-determined area (26ac), and
wherein the first lever (22) is extended to a grip (22a') using which the knee lever mechanism (22) can be operated.

12. Articulated arm system with the following characteristics:
a first articulated arm (10a) according to claim 11 and a second articulated arm (10b) according to claim 11,
wherein the second flange (64) of the first articulated arm (10, 10a, 10b) is connected to the first flange (62) of the second articulated arm (10, 10a, 10b).

13. Process for manufacturing an articulated arm (10, 10a, 10b) which has a first segment (12) and a second segment (14), wherein the first segment (12) is connected to a first hinged element (16) and the second segment (14) is connected to a second hinged element (18), and wherein the first and the second hinged element (18) are engaged in such a way that they form a rotating joint (20), and wherein the second hinged element (18) has a surface with at least partially constant curvature radius, with the following step:
integration of a knee lever mechanism (22) into the first segment (12), which is designed to exert a locking force (F) onto the surface of the second hinged element (18) in the direction of a face normal of the surface,
wherein the knee lever mechanism (22) comprises a first lever (22a, 22a') and a second lever (22b) which are connected to each other using a common hinge (24c, 24c'),
wherein the first lever (22a, 22a') is positioned on the first segment (12) using a first bearing (24a) so that it is possible to rotate the first lever (22a, 22a') relative to the first segment (12) around a first pivot point (24a) and so that further degrees of freedom are limited and/or restricted, and
wherein the second lever (22b) is positioned on the first segment (12) using a second bearing (24b, 24b') so that it is possible to rotate the second lever (22b) relative to the first segment (12) around a second pivot point (24b, 24b'), wherein the second pivot point (24b, 24b') can be moved along the longitudinal axis (28) of the first segment (12), and so that further degrees of freedom are limited and/or restricted,
wherein a maximum distance (32) between the first and the second pivot point (24a, 24a') is limited in such a way that the statically over-determined area (26ac) is formed along the track of motion (26) of the common hinge (24c, 24c') of the first and the second lever (22a, 22a', 22b) around the first pivot point (24a),
wherein the first bearing (24a) is designed in such a way that the first pivot point (24a) is located outside the longitudinal axis (28) of the first segment (12).

14. Method for operating an articulated arm (10, 10a, 10b) which has a first segment (12) and a second segment (14), wherein the first segment (12) is connected to a first hinged element (16) and the second segment (14) is connected to a second hinged element (18), and wherein the first and the second hinged element (18) are engaged in such a way that they form a rotating joint (20), and wherein the second hinged element (18) has a surface with at least partially constant curvature radius, and wherein the first segment (12) has a knee lever mechanism (22), with the following steps:
tightening of the knee lever mechanism (22) so that a locking force (F) is exerted onto the surface of the second hinged element (18) in the direction of a face normal of the surface,
wherein the knee lever mechanism (22) comprises a first lever (22a, 22a') and a second lever (22b) connected to each other using a common hinge (24c, 24c'),
wherein the first lever (22a, 22a') is positioned on the first segment (12) using a first bearing (24a) so that it is possible to rotate the first lever (22a, 22a') relative to the first segment (12) around a first pivot point (24a), and so that further degrees of freedom are limited and/or restricted, and
wherein the second lever (22b) is positioned on the first segment (12) using a second bearing (24b, 24b') in such a way that it is possible to rotate the second lever (22b) relative to the first segment (12) around a second pivot point (24b, 24b'), wherein the second pivot point (24b, 24b') can be displaced along the longitudinal axis (28) of the first segment (12), and so that further degrees of freedom are limited and/or restricted,
wherein a maximum distance (32) between the first and the second pivot point (24a, 24b, 24b') is limited in such a way that the statically over-determined area (26ac) is formed along the track of motion (26) of the common hinge (24c, 24c') of the first and the second lever (22a, 22b, 22b') around the first pivot point (24a),
wherein the first bearing (24a) is designed in such a way that the first pivot point (24a) lies outside the longitudinal axis (28) of the first segment (12).

## Revendications

1. Bras articulé (10, 10a, 10b) avec les caractéristiques suivantes;
un premier segment (12) et un second segment (14), dans lequel le premier segment (12) est raccordé à un premier élément articulé (16) et le second segment (14) est raccordé à un second élément articulé (18), et dans lequel le premier et le second élément articulé (18) sont en prise de telle manière qu'ils forment une articulation rotative (20), dans lequel le second élément articulé (18) présente une surface avec un rayon de courbure au moins partiellement constant, et
dans lequel le premier segment (12) présente un mécanisme à genouillère (22) qui est réalisé afin d'exercer une force d'arrêt (F) sur la surface du second élément articulé (18) en direction d'une normale de surface de la surface,
dans lequel le mécanisme à genouillère (22) comporte un premier levier (22a, 22a') et un second levier (22b) qui sont raccordés entre eux au moyen d'une charnière (24c, 24c') commune,
dans lequel le premier levier (22a, 22a') est logé au moyen d'un premier palier (24a) par rapport au premier segment (12) de sorte qu'une rotation du premier levier (22a, 22a') soit permise par rapport au premier segment (12) autour d'un premier point rotatif (24a) et de sorte que d'autres degrés de liberté soient limités et/ou supprimés, et
dans lequel le second levier (22b) est logé au moyen d'un second palier (24b, 24b') par rapport au premier segment (12) de sorte qu'une rotation du second levier (22b) soit permise par rapport au premier segment (12) autour d'un second point rotatif (24b, 24b'), dans lequel le second point rotatif (24b, 24b') est mobile le long de l'axe longitudinal (28) du premier segment (12), et de sorte que d'autres degrés de liberté soient limités et/ou supprimés,
**caractérisé en ce**
**qu'**une distance maximale (32) entre le premier et le second point rotatif (24a, 24b, 24b') soit limitée de telle manière que la zone surdéterminée statiquement (26ac) soit réalisée le long de la bande de déplacement (26) de la charnière commune (24c, 24c') du premier et du second levier (22a, 22a', 22b) autour du premier point rotatif (24a),
et **que** le premier palier (24a) est réalisé de sorte que le premier point rotatif (24a) soit agencé en dehors de l'axe longitudinal (28) du premier segment (12).

2. Bras articulé (10, 10a, 10b) selon la revendication 1, dans lequel le mécanisme à genouillère (22) présente un levier de libération (58) qui est agencé entre le premier et le second levier (22a, 22a', 22b) de sorte que lors de l'actionnement du levier de libération (58) un couple agit sur la charnière commune (24c, 24c') afin de déplacer la charnière commune (24c, 24c') sur la bande de déplacement (26) de la section (26bc) de la zone surdéterminée statiquement (26ac) au-delà du premier point (26b).

3. Bras articulé (10, 10a, 10b) selon la revendication 1 ou 2, dans lequel l'articulation rotative (20) est une articulation sphérique, et la surface comporte un segment de surface sphérique.

4. Bras articulé (10, 10a, 10b) selon l'une quelconque des revendications 1 à 3, dans lequel le mécanisme à genouillère (22) est réalisé afin d'exercer la force d'arrêt le long de l'axe longitudinal (28) du premier segment (12).

5. Bras articulé (10, 10a, 10b) selon l'une quelconque des revendications 1 à 4, dans lequel le mécanisme à genouillère (22) est réalisé afin d'atteindre lors de la rotation du premier levier (22a, 22a') autour du premier point rotatif (24a) un déplacement du second point rotatif (24c, 24c') le long de l'axe longitudinal (28) du premier segment (12) et/ou d'exercer dans une zone surdéterminée statiquement (26ac) la force d'arrêt (F) par le second point rotatif (24b, 24b') sur la surface.

6. Bras articulé (10, 10a, 10b) selon l'une quelconque des revendications 1 à 5, dans lequel le second point rotatif (24b, 24b') se trouve sur l'axe longitudinal (28) du premier segment (12).

7. Bras articulé (10, 10a, 10b) selon l'une quelconque des revendications 1 à 6, dans lequel la force d'arrêt (F) est maintenue dans une section (26bc); et/ou
dans lequel la section (26bc) de la zone surdéterminée statiquement (26ac) est délimitée par un premier point (26b) et un second point (26c) sur la bande de déplacement (26) de la charnière commune (24c, 24c'), dans lequel le premier point (26b) est un point d'intersection de la bande de déplacement (26) de la charnière commune (24c, 24c') avec une droite (32), qui relie entre eux le premier et le second point rotatif (24a, 24b, 24b') et la charnière commune (24c, 24c'); et dans lequel dans le second point (26c) le premier segment (12) pour le premier levier (22a, 22a') forme une butée (26c); et/ou
dans lequel le premier levier (24a) est logé de manière mobile par rapport au premier segment (12) le long de l'axe longitudinal (28) du premier segment (12) de sorte qu'une distance maximale (32) entre le premier et le second point rotatif (24a, 24b, 24b') soit réglable; et/ou
dans lequel le premier segment (12) présente un filetage sur un premier côté, au moyen duquel un élément de vis (52) est vissable pour le réglage du premier point rotatif (24a) le long de l'axe longitudinal (28).

8. Bras articulé (10, 10a, 10b) selon l'une quelconque des revendications 1 à 7, dans lequel le second levier (22b) est raccordé à un piston (22d) par le second palier (24b, 24b'), dans lequel le piston (22d) est mobile axialement sur l'axe longitudinal (28) du premier segment (12) afin d'exercer la force d'arrêt (F) le long de l'axe longitudinal (28) sur la surface; et/ou
dans lequel le piston (22d) présente une forme de tête adaptée à la surface.

9. Bras articulé (10, 10a, 10b) selon l'une quelconque des revendications 2 à 8, dans lequel le premier élément articulé (16) comporte un coussinet à rotule (16) et dans lequel le second élément articulé (18) comporte une tête sphérique (18) avec le segment de surface sphérique; et/ou
dans lequel le coussinet à rotule (16) entoure la tête sphérique (18) de sorte que des angles de basculement soient limités dans un segment circulaire rotatif; et/ou dans lequel le coussinet à rotule (16) présente au moins un évidement (16a) qui autorise dans un autre segment circulaire rotatif qui se raccorde au segment circulaire rotatif, un angle de basculement, lequel est supérieur aux angles de basculement limités; et/ou dans lequel le premier segment (12) présente sur un second côté une douille (42) avec un filetage, au moyen duquel un boîtier sphérique (16) qui comporte le coussinet à rotule (16), est vissé.

10. Bras articulé (10, 10a, 10b) selon l'une quelconque des revendications 1 à 9, dans lequel le premier segment (12) présente sur un premier côté une première bride (62) et dans lequel le second segment (14) présente sur un second côté qui est éloigné du premier côté du premier segment (12), une seconde bride (64) qui peut être raccordée à une première bride (62) d'un autre bras articulé (10, 10a, 10b).

11. Bras articulé (10, 10a, 10b) selon l'une quelconque des revendications 1 à 10, dans lequel le mécanisme à genouillère (22) est réalisé afin d'atteindre lors de la rotation du premier levier (22a, 22a') autour du premier point rotatif (24a) un déplacement du second point rotatif (24c, 24c') le long de l'axe longitudinal (28) du premier segment (12) et/ou d'exercer dans une zone surdéterminée statiquement (26ac) la force d'arrêt (F) par le second point rotatif (24b, 24b') sur la surface, et
dans lequel le premier levier (22a) est prolongé en une poignée (22a') au moyen de laquelle le mécanisme à genouillère (22) peut être commandé.

12. Système de bras articulé avec les caractéristiques suivantes:
un premier bras articulé (10a) selon la revendication 11 et un second bras articulé (10b) selon la revendication 11,
dans lequel la seconde bride (64) du premier bras articulé (10, 10a, 10b) est raccordée à la première bride (62) du second bras articulé (10, 10a, 10b).

13. Procédé de fabrication d'un bras articulé (10, 10a, 10b) qui présente un premier segment (12) et un second segment (14), dans lequel le premier segment (12) est raccordé à un premier élément articulé (16) et le second segment (14) est raccordé à un second élément articulé (18), et dans lequel le premier et le second élément articulé (18) sont en prise de telle manière qu'ils forment une articulation rotative (20), et dans lequel le second élément articulé (18) présente une surface avec un rayon de courbure au moins partiellement constant, avec l'étape suivante:
l'installation d'un mécanisme à genouillère (22) dans le premier segment (12) qui est réalisé afin d'exercer une force d'arrêt (F) sur la surface du second élément articulé (18) en direction d'une normale de surface de la surface,
dans lequel le mécanisme à genouillère (22) comporte un premier levier (22a, 22a') et un second levier (22b) qui sont raccordés entre eux au moyen d'une charnière (24c, 24c') commune,
dans lequel le premier levier (22a, 22a') est logé au moyen d'un premier palier (24a) par rapport au premier segment (12) de sorte qu'une rotation du premier levier (22a, 22a') soit permise par rapport au premier segment (12) autour d'un premier point rotatif (24a) et de sorte que d'autres degrés de liberté soient limités et/ou supprimés, et
dans lequel le second levier (22b) est logé au moyen d'un second palier (24b, 24b') par rapport au premier segment (12) de sorte qu'une rotation du second levier (22b) soit permise par rapport au premier segment (12) autour d'un second point rotatif (24b, 24b'),
dans lequel le second point rotatif (24b, 24b') est mobile le long de l'axe longitudinal (28) du premier segment (12), et de sorte que d'autres degrés de liberté soient limités et/ou supprimés,
dans lequel une distance maximale (32) entre le premier et le second point rotatif (24a, 24b, 24b') soit limitée de telle manière que la zone surdéterminée statiquement (26ac) soit réalisée le long de la bande de déplacement (26) de la charnière commune (24c, 24c') du premier et du second levier (22a, 22a', 22b) autour du premier point rotatif (24a),
dans lequel le premier palier (24a) est réalisé de sorte que le premier point rotatif (24a) soit agencé en dehors de l'axe longitudinal (28) du premier segment (12).

14. Procédé de commande d'un bras articulé (10, 10a, 10b) qui présente un premier segment (12) et un second segment (14), dans lequel le premier segment (12) est raccordé à un premier élément articulé (16) et le second segment (14) est raccordé à un second élément articulé (18), et dans lequel le premier et le second élément articulé (18) sont en prise de telle manière qu'ils forment une articulation rotative (20), et dans lequel le second élément articulé (18) présente une surface avec un rayon de courbure au moins partiellement constant, et dans lequel le premier segment (12) présente un mécanisme à genouillère (22), avec les étapes suivantes:
le serrage du mécanisme à genouillère (22) de sorte qu'une force d'arrêt (F) soit exercée sur la surface du second élément articulé (18) en direction d'une normale de surface de la surface,
dans lequel le mécanisme à genouillère (22) comporte un premier levier (22a, 22a') et un second levier (22b) qui sont raccordés entre eux au moyen d'une charnière (24c, 24c') commune,
dans lequel le premier levier (22a, 22a') est logé au moyen d'un premier palier (24a) par rapport au premier segment (12) de sorte qu'une rotation du premier levier (22a, 22a') soit permise par rapport au premier segment (12) autour d'un premier point rotatif (24a) et de sorte que d'autres degrés de liberté soient limités et/ou supprimés, et
dans lequel le second levier (22b) est logé au moyen d'un second palier (24b, 24b') par rapport au premier segment (12) de sorte qu'une rotation du second levier (22b) soit permise par rapport au premier segment (12) autour d'un second point rotatif (24b, 24b'),
dans lequel le second point rotatif (24b, 24b') est mobile le long de l'axe longitudinal (28) du premier segment (12), et de sorte que d'autres degrés de liberté soient limités et/ou supprimés,
dans lequel une distance maximale (32) entre le premier et le second point rotatif (24a, 24b, 24b') est limitée telle manière que la zone surdéterminée statiquement (26ac) soit réalisée le long de la bande de déplacement (26) de la charnière commune (24c, 24c') du premier et du second levier (22a, 22a', 22b) autour du premier point rotatif (24a),
dans lequel le premier palier (24a) est réalisé de sorte que le premier point rotatif (24a) soit agencé en dehors de l'axe longitudinal (28) du premier segment (12).
